(19) Europäisches Patentamt
European Patent Office
Office européen des brevets

(11) **EP 3 381 674 A1**

(12) **EUROPEAN PATENT APPLICATION**
published in accordance with Art. 153(4) EPC

(43) Date of publication:
**03.10.2018 Bulletin 2018/40**

(51) Int Cl.:
*B32B 5/24* (2006.01)          *C08G 59/40* (2006.01)
*C08G 59/50* (2006.01)         *C08J 9/06* (2006.01)

(21) Application number: **16868561.8**

(22) Date of filing: **22.11.2016**

(86) International application number:
**PCT/JP2016/084623**

(87) International publication number:
**WO 2017/090618 (01.06.2017 Gazette 2017/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **27.11.2015   JP 2015231724
07.01.2016   JP 2016002005
15.04.2016   JP 2016081958**

(71) Applicant: **Sekisui Plastics Co., Ltd.
Osaka-shi, Osaka 530-0047 (JP)**

(72) Inventors:
• **OKAMOTO, Koichiro**
  **Tenri-shi**
  **Nara 632-0007 (JP)**
• **NISHIUMI, Kengo**
  **Tenri-shi**
  **Nara 632-0007 (JP)**
• **SASAHARA, Shuichi**
  **Tenri-shi**
  **Nara 632-0007 (JP)**

(74) Representative: **Hoffmann Eitle
Patent- und Rechtsanwälte PartmbB
Arabellastraße 30
81925 München (DE)**

(54) **FOAMABLE PANEL-REINFORCING MATERIAL, PRODUCTION METHOD THEREFOR, AND PANEL-REINFORCING METHOD**

(57)    An expandable panel reinforcing material, including an expandable composition layer including at least a plastic component of a crosslinked polymer matrix having curability, a curing agent of the plastic component, a curing accelerator of the plastic component, a crosslinked polymer matrix, a filler, and a thermally decomposable blowing agent having a decomposition temperature of T°C, and a sheet-like fiber layer that is laminated on the expandable composition layer, in which the expandable composition layer exhibits a storage elastic modulus (G') of $1 \times 10^1$ to $1 \times 10^4$ Pa when the storage elastic modulus (G') is measured with a dynamic viscoelasticity measuring apparatus [provided that a measuring temperature is (T - 10)°C].

Fig. 1

S3400 15.0kV 11.0mm x30 ESED 60Pa          1.00mm

EP 3 381 674 A1

**Description**

TECHNICAL FIELD

The present invention relates to a foamable panel-reinforcing material, a production method therefor, and a panel-reinforcing method (an expandable panel reinforcing material, a method for producing the same, and a method of reinforcing a panel). More particularly, the present invention relates to an expandable panel reinforcing material for enhancing the bending strength of a panel such as a carbon fiber-reinforced resin plate, a steel plate, and an aluminum plywood used in transportation equipment, metal cases, and the like while achieving lightness, a method for producing the same, and a method of reinforcing a panel.

BACKGROUND TECHNOLOGY

A panel such as a carbon fiber-reinforced resin plate, a steel plate, and an aluminum plywood used in transportation equipment (for example, vehicle body), metal cases, and the like tends to be thin in order to achieve lightness, and in recent years, the panel having a thickness of about 0.6 to 0.8 mm has mainly been used. For this reason, there is a problem that the panel becomes easy to be deformed and buckled with a weak force, and a strain is generated to deteriorate appearance. Additionally, in a thin panel, since rigidity and impact resistance are reduced, safety of passengers to collision may be damaged in the vehicle body of transportation equipment. For this reason, in parts at which collision is supposed, it is required that rigidity of the panel is still more enhanced.
Conventionally, reinforcement of a site of the panel requiring rigidity has been performed by a method of sticking a sheet-like reinforcing material to the inside to integrate it with the panel. As the reinforcing material, a reinforcing material obtained by blending a liquid rubber, a solid rubber, a curing agent, a filler, a blowing agent, and various additives in an alkyd resin, an epoxy resin, an acrylic resin, a urethane resin, a urea resin or the like, kneading them with a calendar roll, pressing the kneading product into a sheet, and processing the sheet into a predetermined thickness is known. This reinforcing material reinforces the panel by sticking it to the panel, and curing this by heating.
As the reinforcing material, for example, in Patent Document 1 (Japanese Unexamined Patent Application, First Publication No. 2005-139218), a laminate of a constrained layer such as a glass cloth, and a sheet-like resin layer consisting of a heat expandable and curable resin composition has been proposed. The resin composition herein comprises a NBR rubber, a SBR rubber, a filler, a blowing agent, an epoxy-based resin and a curing agent thereof.

PRIOR ART DOCUMENTS

Patent Documents

Patent Document 1: Japanese Unexamined Patent Application, First Publication No. 2005-139218

SUMMARY OF THE INVENTION

PROBLEM TO BE SOLVED BY THE INVENTION

Since in the reinforcing material described in Patent Document 1, it was difficult to increase an expansion ratio, provision of a reinforcing material which can afford a high expansion ratio has been demanded.

MEANS FOR SOLVING THE PROBLEM

The present invention was made in view of such situation, and an object thereof is to provide an expandable panel reinforcing material which can afford a high expansion ratio by curing, and can impart firm adhesiveness, the bending strength and toughness to the panel after curing, while showing a sufficient temporary adhesive force to the panel due to moderate pressure-sensitive adhesiveness before curing. The present inventors intensively made study in order to solve the above-mentioned problems, and as a result, found out that the above-mentioned problems can be solved by that an expandable composition layer comprising at least a plastic component of a crosslinked polymer matrix having curability, a curing agent of the above-mentioned plastic component, a curing accelerator of the above-mentioned plastic component, a crosslinked polymer matrix, a filler, and a thermally decomposable blowing agent has the specific storage elastic modulus (G'), resulting in completion of the present invention. In addition, in the reinforcing material of the present invention, the plastic component mainly contributes to manifestation of pressure-sensitive adhesiveness, the plastic component, the curing agent, and the curing accelerator mainly contribute to manifestation of adhesiveness to the panel, the filler and the decomposable blowing agent contribute to manifestation of expandability, and the crosslinked polymer matrix mainly contributes to shape retainability of the reinforcing material.

Thus, according to the present invention, there is provided an expandable panel reinforcing material, comprising an expandable composition layer comprising at least a plastic component of a crosslinked polymer matrix having curability, a curing agent of the plastic component, a curing accelerator of the plastic component, a crosslinked polymer matrix, a filler, and a thermally decomposable blowing agent having a decomposition temperature of $T°C$, and a sheet-like fiber layer that is laminated on the expandable composition layer, wherein the expandable composition layer exhibits a storage elastic modulus (G') of $1 \times 10^1$ to $1 \times 10^4$ Pa when the storage elastic modulus (G') is measured with a dynamic viscoelasticity measuring apparatus [provided that a measurement temperature is $(T - 10)°C$].

According to the present invention, there is also provided a method for producing the expandable panel reinforcing material, the method comprising obtaining the crosslinked polymer matrix by polymerizing a monofunctional monomer having one polymerizable functional group and a polyfunctional monomer having two or more polymerizable functional groups with use of a polymerization initiator, wherein the polymerization is performed in the presence of the plastic component, the curing agent, the curing accelerator, the filler, and the thermally decomposable blowing agent.

According to the present invention, there is further provided a method for reinforcing a panel, the method comprising the steps of sticking the expandable panel reinforcing material to a panel to temporarily fixing the expandable panel reinforcing material and the panel; and subjecting the expandable panel reinforcing material to heat expanding and curing at $T°C$ or higher.

EFFECTS OF INVENTION

According to the present invention, there can be provided an expandable panel reinforcing material which secures lightness due to increase in an expansion ratio, and the bending strength, and can impart toughness by increase in a breaking strain to a panel, while showing a sufficient temporary adhesive force to the panel due to pressure-sensitive adhesiveness of the initial state.

In accordance with any one of the following or a combination thereof, there can also be provided an expandable panel reinforcing material which has a more improved temporary adhesive force, more improved lightness, and the more improved bending strength, and can more impart toughness to the panel.

(1) The thermally decomposable blowing agent is selected from azodicarbonamide, azobisisobutyronitrile, barium azodicarboxylate, nitrodiguanidine, N,N'-dinitrosopentamethylenetetramine, N,N'-dimethyl-N,N'-dinitrosoterephthalamide, P,P'-oxybis(benzenesulfonyl hydrazide), hydrazodicarbonamide, paratoluenesulfonyl hydrazide, diphenylsulfone-3,3'-disulfonyl hydrazide, allylbis(sulfonyl hydrazide), p-toluylenesulfonyl semicarbazide, 4,4'-oxybis(benzenesulfonyl semicarbazide), 5-phenyl-1,2,3,4-tetrazole, sodium bicarbonate, ammonium carbonate, and anhydrous sodium nitrate, and is contained in an amount of 0.1 to 10 parts by weight, based on 100 parts by weight of the expandable composition layer.

(2) When being subjected to heat expanding and curing at $(T + 20)°C$ for 20 minutes, the expandable panel reinforcing material exhibits an expansion ratio of 1.5 to 10.

(3) When the expandable panel reinforcing material is formed into a reinforced panel by sticking the expandable panel reinforcing material to a cold rolled steel plate having a thickness of 0.8 mm and subjecting the expandable panel reinforcing material to heat expanding and curing at $(T + 20)°C$ for 20 minutes, the reinforced panel exhibits to the cold rolled steel plate the following nature:
in three-point bending measured at a span of 100 mm,

(i) strength at a 1 mm displacement is 25 N or more,
(ii) strength at a 2 mm displacement is 50 N or more, and
(iii) strain energy up to a breaking point is 0.5 N·m or more.

(4) The expandable panel reinforcing material exhibits a pressure-sensitive adhesive force of 0.01 to 0.5 $N/mm^2$.

(5) The sheet-like fiber layer is a woven fabric or a unidirectional cloth of an inorganic fiber or an organic fiber and is positioned on a one side surface layer of the expandable panel reinforcing material.

(6) The crosslinked polymer matrix is a copolymer of a monofunctional monomer having one polymerizable functional group and a polyfunctional monomer having two or more polymerizable functional groups.

(7) The plastic component is a liquid epoxy-based resin exhibiting a viscosity in a range of 500 to 30,000 mPa·s at a temperature of 25°C, and the liquid epoxy-based resin comprises at least one component having a benzene skeleton.

(8) The curing agent comprises at least dicyanodiamide.

(9) The curing accelerator is an amine-based or imidazole-based curing accelerator.

(10) When being subjected to heat expanding and curing at $(T + 20)°C$ for 20 minutes, the expandable panel reinforcing material affords an expanded body having a closed-cell structure with an average cell diameter of 10 to 500 μm.

(11) The expandable panel reinforcing material is used for reinforcing a panel having a thickness of 3 mm or less, the panel being selected from a carbon fiber-reinforced resin plate, a steel plate, and an aluminum plate.

(12) The expandable composition layer further comprises a compound containing rubber or a rubber component that is phase-separated in the plastic component of the crosslinked polymer matrix to be an island part of a sea-island structure, and

the expandable panel reinforcing material exhibits a physical property that a change rate of maximum point strengths at -40°C and 80°C to a maximum point strength at 23°C is 25% or less, in maximum point strengths obtained by measuring a reinforced panel with three-point bending at a span of 100 mm under temperature atmospheres of -40°C, 23°C, and 80°C, the reinforced panel being obtained by sticking the expandable panel reinforcing material to a cold rolled steel plate having a thickness of 0.8 mm and integrating the expandable panel reinforcing material and the cold rolled steel plate under heat at 180°C.

(13) The island part comprises a specific island part at a phase separation scale of 10 to 1,000 nm, and the specific island part exists, in a cross-sectional photograph of a panel reinforcing material after heat expansion and curing with use of an electron microscope, in the number of 10 or more in a range of 3,000 nm × 3,000 nm.

Furthermore, according to the method for reinforcing a panel using the expandable panel reinforcing material, securement of lightness and rigidity, and impartation of toughness by increase in a breaking strain to the panel can be simply performed.

BRIEF DESCRIPTION OF THE DRAWINGS

Fig. 1 is a cross-sectional SEM photograph of a heat expansion and curing product of the expandable panel reinforcing material of Example 1.
Fig, 2 is a cross-sectional TEM photograph of a heat expansion and curing product of the expandable panel reinforcing material of Example 6.
Fig. 3 is a cross-sectional TEM photograph of a heat expansion and curing product of the expandable panel reinforcing material of Example 8.
Fig. 4 is a cross-sectional TEM photograph of a heat expansion and curing product of the expandable panel reinforcing material of Example 10.

BEST MODE FOR CARRYING OUT THE INVENTION

The panel reinforcing material and the method of reinforcing a panel of the present invention will be illustrated in detail below. The present invention is not limited to the following illustration but can be variously changed in a range of the gist thereof.

(Expandable Panel Reinforcing Material)

The expandable panel reinforcing material (hereinafter, also simply referred to as reinforcing material) comprises an expandable composition layer comprising at least a plastic component of a crosslinked polymer matrix having curability, a curing agent of the plastic component, a curing accelerator of the plastic component, a crosslinked polymer matrix, a filler, and a thermally decomposable blowing agent having a decomposition temperature of T°C, and a sheet-like fiber layer which is laminated on the expandable composition layer.

Additionally, the expandable composition layer exhibits a storage elastic modulus (G') of $1 \times 10^1$ to $1 \times 10^4$ Pa when the storage elastic modulus (G') is measured with a dynamic viscoelasticity measuring apparatus [provided that a measuring temperature is $(T - 10)$°C]. When the storage elastic modulus is smaller than $1 \times 10^1$ Pa, bubbles become coarse, and a breaking point displacement may become too small. When the storage elastic modulus is greater than $1 \times 10^4$ Pa, sufficient expansion may not be generated. The storage elastic modulus can take $1 \times 10^1$ Pa, $5 \times 10^1$ Pa, $1 \times 10^2$ Pa, $5 \times 10^2$ Pa, $1 \times 10^3$ Pa, $5 \times 10^3$ Pa, and $1 \times 10^4$ Pa. The storage elastic modulus is preferably $1 \times 10^2$ to $5 \times 10^3$ Pa. An upper limit of the storage elastic modulus may be $1 \times 10^3$ Pa.

When being subjected to heat expanding and curing at $(T + 20)$°C for 20 minutes, it is preferable that the reinforcing material exhibits an expansion ratio of 1.5 to 10. When the expansion ratio is less than 1.5, weight saving may become insufficient. When the expansion ratio is greater than 10, a breaking point displacement may become small, and the absorption energy of such stress may become small. The expansion ratio can take 1.5, 2, 3, 4, 6, 8, and 10.

The expansion ratio is preferably 1.5 to 6, and more preferably 2 to 4.

When the reinforcing material is formed into a reinforced panel by sticking the reinforcing material to a cold rolled steel plate having a thickness of 0.8 mm and subjecting the reinforcing material to heat expanding and curing at (T + 20)°C for 20 minutes, it is preferable that the reinforced panel exhibits to the cold rolled steel plate the following nature: in three-point bending measured at a span of 100 mm,

（i) the strength at a 1 mm displacement (bending strength when an expanded body layer is displaced by 1 mm) is 25 N or more,
(ii) the strength at a 2 mm displacement (bending strength when an expanded body layer is displaced by 2 mm) is 50 N or more, and
(iii) the strain energy up to a breaking point (area value calculated by integration in a range from a strain 0 to a breaking point strain) is 0.5 N·m or more.

When the strength at a 1 mm displacement is less than 25 N, rigidity of a reinforced panel may be inferior. The strength at a 1 mm displacement can take 25 N, 30 N, 50 N, 60 N, 70 N, 80 N, 90 N, and 100 N. The strength at a 1 mm displacement is not particularly limited, but is more preferably 30 N or more, and further preferably 50 N or more.

When the strength at a 2 mm displacement is less than 50 N, rigidity of a reinforced panel may be inferior. The strength at a 2 mm displacement can take 50 N, 60 N, 70 N, 80 N, 90 N, 100 N, 110 N, 120 N, 130 N, 140 N, 150 N, 160 N, and 170 N. The strength at a 2 mm displacement is not particularly limited, but is more preferably 80 N or more.

When the strain energy up to a breaking point is less than 0.5 N·m, impact absorbability of a reinforced panel may be inferior. The strain energy can take 0.5 N·m, 1.0 N·m, 1.5 N·m, 2.0 N·m, and 2.5 N·m. The strain energy is not particularly limited, but in order to obtain sufficient impact absorbability for actual use, the strain energy is more preferably 1.0 N·m or more, and further preferably 1.5 N·m or more.

It is preferable that the reinforcing material exhibits a pressure-sensitive adhesive force of 0.01 to 0.5 $N/mm^2$. When the pressure-sensitive adhesive force is less than 0.01 $N/mm^2$, a pressure-sensitive adhesive force to a panel may not be sufficient. When the pressure-sensitive adhesive force is higher than 0.5 $N/mm^2$, a pressure-sensitive adhesive force may be too strong to reduce workability. The pressure-sensitive adhesive force can take 0.01 $N/mm^2$, 0.02 $N/mm^2$, 0.05 $N/mm^2$, 0.1 $N/mm^2$, 0.3 $N/mm^2$, 0.4 $N/mm^2$, and 0.5 $N/mm^2$. A more preferable pressure-sensitive adhesive force is 0.05 to 0.3 $N/mm^2$.

A thickness of the reinforcing material is not particularly limited, as far as it is a thickness at which a shape of the reinforcing material can be maintained at working. For example, a thickness is 0.1 to 5 mm.

When being subjected to heat expanding and curing at (T + 20)°C for 20 minutes, it is preferable that the reinforcing material affords an expanded body having a closed-cell structure with an average cell diameter of 10 to 500 $\mu$m. When the average cell diameter is less than 10 $\mu$m, increase in a film thickness may become difficult. When the average cell diameter is greater than 500 $\mu$m, a breaking point displacement may become small and the strain energy may become small, due to easy cracking. The average cell diameter can take 10 $\mu$m, 50 $\mu$m, 100 $\mu$m, 200 $\mu$m, 300 $\mu$m, 400 $\mu$m, and 500 $\mu$m. A more preferable average cell diameter is 50 to 300 $\mu$m.

(1) Plastic Component

A plastic component is not particularly limited, as far as it imparts plasticity to a crosslinked polymer matrix, and it itself has curability. An example thereof includes the known epoxy resin which is generally used in an epoxy resin adhesive.

Examples of the epoxy resin include bisphenol type epoxy resins such as bisphenol F type and bisphenol A type, novolak type epoxy resins, biphenyl type epoxy resins, dicyclopentadiene type epoxy resins, naphthalene type epoxy resins, cyclohexane type epoxy resins, hydrogenated bisphenol A type epoxy resins, cyclohexene oxide type epoxy resins, glycidylamine type epoxy resins, and the like. Inter alia, bisphenol type epoxy resins such as bisphenol F type and bisphenol A type, and novolak type epoxy resins are preferable because the balance between performance such as the adhering strength, durability, impact resistance, and heat resistance, and the cost is excellent. It is preferable that the epoxy-based resins are a liquid material having the viscosity in a range of 500 to 30,000 mPa·s at a temperature of 25°C. In addition, the viscosity of epoxy-based resins is a value which was measured at a test temperature of 25°C using a Brookfield-type rotation viscometer in accordance with JIS K 7117-1:1999. The viscosity can take 500 mPa·s, 1,000 mPa·s, 3,000 mPa·s, 5,000 mPa·s, 10,000 mPa·s, 20,000 mPa·s, and 30,000 mPa·s.

(2) Curing Agent

A curing agent is not particularly limited, as far as it has reactivity with the above-mentioned plastic component. Examples of the curing agent include an amine-type curing agent, an acid anhydride, a novolak resin, phenol, mercaptan, a Lewis acid amine complex, an onium salt, imidazole, and the like. Examples of the amine-type curing agent include aromatic amines such as diaminodiphenylmethane and diaminodiphenylsulfone, aliphatic amines, imidazole derivatives, dicyanodiamide, tetramethylguanidine, thiourea-added amine, and the like; isomers and modified bodies thereof, and the like. Examples of the curing agent other than the amine type include 4,4-diaminodiphenylsulfone, imidazole derivatives such as 2-n-heptadecylimidazole, isophthalic acid dihydrazide, N,N-dialkylurea derivatives, N,N-dialkylthiourea derivatives, acid anhydrides such as tetrahydrophthalic acid anhydride, isophoronediamine, m-phenylenediamine, N-aminoethylpiperazine, melamine, guanamine, boron trifluoride complex compounds, trisdimethylaminomethylphenol, polythiol, and the like. Among them, the amine-type curing agent is preferable, and dicyanodiamide is particularly preferable. The curing agents may be used alone, or two or more may be used by combining them.

The content of the curing agent is not particularly limited, but an optimal amount may be different depending on a kind of the curing agent. For example, the curing agent can be preferably used at the previously known optimal amount for every curing agent. As this optimal amount, an amount described, for example, in Chapter 3 of "General Review of Epoxy Resins Basic Edition" (The Japan Society of Epoxy Resin Technology, published in 2003) can be adopted.

(3) Curing accelerator

A curing accelerator is a condensation catalyst for accelerating curing of the reinforcing material. Examples of the curing accelerator include amine-based curing accelerators, imidazole-based curing accelerators, and derivatives thereof. Specifically, examples thereof include urea derivatives such as 1,1'-(4-methyl-1,3-phenylene)bis(3,3-dimethylurea), phenyl-dimethylurea, methylene-diphenyl-bisdimethylurea, 3-phenyl-1,1-dimethylurea, 3-(3,4-dichlorophenyl)-N,N-dimethylurea (DCMU), and 3-(3-chloro-4-methylphenyl)-1,1-dimethylurea; tertiary amines; imidazole derivatives such as 2-undecylimidazole (C11Z), 2-heptadecylimidazole (C17Z), 2-phenylimidazole (2PZ), and 1,2-dimethylimidazole (1,2 DMZ); urea compounds such as phenyldimethylurea (PDMU); monoethylamine trifluoride; amine complexes such as an amine trichloride complex; and the like.

When among them, dicyanodiamide is used as the curing agent, amine-based curing accelerators, and imidazole-based curing accelerators having the function as a crosslinked amine and an accelerating catalyst, and derivative thereof are suitably used. Examples of the amine-based curing accelerators include 3-(3,4-dichlorophenyl)-N,N-dimethylurea (DCMU), and examples of the imidazole-based curing accelerators include 2-heptadecylimidazole (C17Z).

As the curing accelerator, DCMU is particularly preferable.

The content of the curing accelerator is preferably 0.1 to 15 parts by weight, and further preferably 1 to 10 parts by weight, based on 100 parts by weight of the plastic component.

(4) Crosslinked Polymer Matrix

A crosslinked polymer matrix is preferably a copolymer of a monofunctional monomer having one polymerizable functional group and a polyfunctional monomer having two or more polymerizable functional groups, and preferably consists of a (meth)acrylic-based resin. The (meth)acrylic-based resin is not particularly limited, as far as it is a resin which constitutes a polymer matrix, and can include the plastic component, the curing agent, and the curing accelerator in a matrix. A (meth)acrylic-based resin is preferably a resin having a benzene skeleton. Examples of the (meth)acrylic-based resin include resins derived from a copolymer of a monofunctional (meth)acrylic-based monomer and a polyfunctional (meth)acrylic-based monomer.

The monofunctional (meth)acrylic-based monomer means a monomer in which one (meth)acryloyl group is contained in one molecule. It is, for example, (meth)acrylate, (meth)acrylamide or a (meth)acrylamide derivative which is obtained by reacting an aromatic or aliphatic alcohol having at least one hydroxy group in a molecule, and an alkylene oxide adduct thereof with (meth)acrylic acid.

Examples of the (meth)acrylate include specifically aliphatic (meth)acrylic-based monomers such as methyl (meth)acrylate, ethyl (meth)acrylate, propyl (meth)acrylate, n-butyl (meth)acrylate, cyclohexyl (meth)acrylate, 2-ethylhexyl (meth)acrylate, isobornyl (meth)acrylate, tetrahydrofurfuryl (meth)acrylate, 4-hydroxybutyl (meth)acrylate, 4-hydroxybutyl (meth)acrylate, 2-hydroxyethyl (meth)acrylate, 1,10-decanediol (meth)acrylate, and 1,9-nonanediol (meth)acrylate; (meth)acrylic-based monomers having a benzene skeleton such as benzyl (meth)acrylate, phenoxyethyl (meth)acrylate, phenyl diethylene glycol (meth)acrylate, 2-hydroxy-3-phenoxypropyl (meth)acrylate, methylphenoxyethyl (meth)acrylate, and ethoxylated orthophenylphenol (meth)acrylate; (meth)acrylic-based monomers having an epoxy group such as glycidyl (meth)acrylate and 4-hydroxybutyl (meth)acrylate glycidyl ether; and the like.

Examples of the (meth)acrylamide or the (meth)acrylamide derivative include specifically tert-butylacrylamide sulfonic acid (TBAS), tert-butylacrylamide sulfonate, N,N-dimethylaminoethylacrylamide (DMAEAA) hydrochloride, N,N-dimethylaminopropylacrylamide (DMAPAA) hydrochloride, (meth)acrylamide, N-methyl(meth)acrylamide, N-ethyl(meth)acrylamide, N-propyl(meth)acrylamide, N,N-dimethyl(meth)acrylamide, N,N-diethyl(meth)acrylamide, acryloylmorpholine, and the like.

The polyfunctional (meth)acrylic-based monomer means (meth)acrylate in which two or more (meth)acryloyl groups are contained in one molecule. Examples thereof include cyclohexanedimethanol di(meth)acrylate, cyclohexanedimethanol (meth)acrylate, dimethyloltricyclodecane di(meth)acrylate, ethylene glycol di(meth)acrylate, propylene glycol di(meth)acrylate, 1,4-butanediol di(meth)acrylate, hexanediol di(meth)acrylate, diethylene glycol di(meth)acrylate, ethylene glycol di(meth)acrylate, propylene glycol di(meth)acrylate, 1,4-butanediol di(meth)acrylate, hexanediol di(meth)acrylate, diethylene glycol di(meth)acrylate, and the like.

Additionally, as the polyfunctional (meth)acrylic-based monomer, urethane-based (meth)acrylate, polyester-based (meth)acrylate, polyether-based (meth)acrylate, epoxy-based (meth)acrylate, diene polymer-based (meth)acrylate, and the like can be suitably used.

The urethane-based (meth)acrylate refers to, for example, (meth)acrylate having a urethane bond in a molecule. The urethane-based (meth)acrylate can be obtained, for example, by esterifying polyurethane obtained by a reaction between polybutadiene diol, polyether polyol, polyester polyol, polycarbonate diol or the like, and polyisocyanate, with (meth)acrylic acid. Polybutadiene-modified urethane-based (meth)acrylate which is obtained by modifying polybutadiene with (meth)acryl is also included in the urethane-based (meth)acrylate. Hydrogenated polybutadiene-modified urethane-based (meth)acrylate which is obtained by modifying hydrogenated polybutadiene with (meth)acryl is also included in the urethane-based (meth)acrylate. Examples of the urethane-based (meth)acrylate include 1,2-polybutadiene-modified urethane-based (meth)acrylate, polyester urethane-based (meth)acrylate, dibutylene glycol urethane-based (meth)acrylate, polycarbonate urethane-based (meth)acrylate, polyether urethane-based (meth)acrylate, and the like.

The polyester-based (meth)acrylate is obtained, for example, by esterifying a hydroxy group of a polyester having a hydroxy group on both ends which is obtained by condensation of polyvalent carboxylic acid and polyhydric alcohol, with (meth)acrylic acid, or esterifying a terminal hydroxy group which is obtained by adding alkylene oxide to polyvalent carboxylic acid, with (meth)acrylic acid.

The polyether-based (meth)acrylate can be obtained, for example, by esterifying a hydroxy group of polyether polyol with (meth)acrylic acid.

The epoxy-based (meth)acrylate can be obtained, for example, by reacting an oxirane ring of a bisphenol-type epoxy resin or a novolak-type epoxy resin having a relatively low molecular weight with (meth)acrylic acid to esterify the resin. Alternatively, carboxyl-modified epoxy (meth)acrylate which is obtained by partially modifying this epoxy-based (meth)acrylate with dibasic carboxylic acid anhydride can also be used.

Examples of the diene polymer-based (meth)acrylate include SBR di(meth)acrylate which is obtained by modifying a liquid styrene-butadiene copolymer with (meth)acryl, polyisoprene di(meth)acrylate which is obtained by modifying polyisoprene with (meth)acryl, and the like.

It is preferable that at least one of the monofunctional (meth)acrylic-based monomer and the polyfunctional (meth) acrylic-based monomer has an epoxy group. By the presence of an epoxy group in an acryl gel skeleton, at the time of curing of an epoxy resin, a plasticizer and an acryl gel skeleton are chemically bound, and the stronger adhering strength can be obtained.

An addition amount of the polyfunctional (meth)acrylic-based monomer is preferably in a range of 0.01 to 1.0% by weight, and more preferably in a range of 0.1 to 0.5% by weight, based on a mixture of the monofunctional (meth)acrylic-based monomer and the polyfunctional (meth)acrylic-based monomer.

The weight ratio between the "plastic component" and the "mixture of the monofunctional (meth)acrylic-based monomer and the polyfunctional (meth)acrylic-based monomer" is preferably in a range of 30 : 70 to 70 : 30, and more preferably in a range of 40 : 60 to 60 : 40.

A method of polymerizing the above-mentioned monofunctional (meth)acrylic-based monomer and the above-mentioned polyfunctional (meth)acrylic-based monomer is not particularly limited, but examples thereof include bulk polymerization, solution polymerization, suspension polymerization, emulsion polymerization, and the like. A polymerization reaction in the above-mentioned method of copolymerization is not particularly limited, but examples thereof include a free radical polymerization reaction, a living radical polymerization reaction, a living anion polymerization reaction, and the like. The above-mentioned polymerization reaction can be initiated, for example, by imparting the energy such as heat, ultraviolet rays, and electron beams. Alternatively, in the above-mentioned polymerization reaction, a reaction initiator may be used upon polymerization.

(5) Thermally Decomposable Blowing Agent

As a thermally decomposable blowing agent, the known thermally decomposable chemical blowing agent and thermally expansible capsule can be widely used. Examples of the thermally decomposable chemical blowing agent include organic chemical blowing agents such as azodicarbonamide (ADCA), azobisisobutyronitrile, barium azodicarboxylate, nitrodiguanidine, N,N'-dinitrosopentamethylenetetramine, N,N'-dimethyl-N,N'-dinitrosoterephthalamide, P,P'-oxybis(benzenesulfonyl hydrazide) (OBSH), hydrazodicarbonamide, paratoluenesulfonyl hydrazide, diphenylsulfone-3,3'-disulfonyl hydrazide, allylbis(sulfonyl hydrazide), p-toluylenesulfonyl semicarbazide, 4,4'-oxybis(benzenesulfonyl semicarbazide), 5-phenyl-1,2,3,4-tetrazole, and organic acid metal salts; and inorganic chemical blowing agents such as sodium bicarbonate, ammonium carbonate, and anhydrous sodium nitrate. The thermally decomposable blowing agents may be used alone, or two or more may be used by mixing them.

The thermally expansible capsule is a microcapsule having a shell of a thermoplastic resin having the gas barrier property, and in which a low boiling point substance (thermally expanding agent) is contained in this shell. By heating the thermally expansible capsule, the thermoplastic resin of the shell is softened, and the capsule is expanded accompanied with increase in the volume due to vaporization of the low boiling point substance to become hollow spherical particles. Since the thermoplastic resin has the gas barrier property, even when heated and expanded, the low boiling point substance can be retained in the particles. Examples of the thermoplastic resin constituting the shell include vinylidene chloride, acrylonitrile, polystyrene, polymethacrylate, polyvinyl alcohol, and the like. Examples of the low boiling point substance to be contained in the shell include a low boiling point liquid hydrocarbon. Inter alia, examples include isopentane, n-pentane, and the like which are easily vaporized.

Examples of a commercially available product of the thermally expansible capsule include Expancel (manufactured by Japan Fillite Co., Ltd.), Matsumoto Microsphere (manufactured by Matsumoto Yushi-Seiyaku Co., Ltd.), Microsphere (manufactured by KUREHA CORPORATION), and the like. These thermally expansible capsules may be used alone, or two or more may be used by mixing them.

As the thermally decomposable blowing agent, OBSH having a decomposition temperature T of 160°C is preferable.

An addition amount of the thermally decomposable blowing agent can be appropriately a necessary amount for obtaining the desired expansion ratio. For example, it is preferable that 0.1 to 10 parts by weight is contained in 100 parts by weight of the expandable composition layer.

(6) Filler

By adding a filler, thickening property, expandability, and low curing contractility can be imparted. The filler is not particularly limited, but examples thereof include inorganic fillers consisting of finely pulverized silica, alumina, calcium carbonate, magnesium oxide, magnesium hydroxide, clay mineral, layered double hydroxide, hollow microballoon or the like. These may be used alone, or two or more may be used concurrently. Additionally, a surface of the above-mentioned filler may be treated with a surface treating agent such as a silane coupling material.

Examples of the finely pulverized silica include silica fine powder obtained by pulverization by a dry method (for example, product name: Aerosil 300 manufactured by NIPPON AEROSIL CO., LTD.), fine powder obtained by modifying silica fine powder with hexamethyldisilazane (for example, product name: Aerosil RX300, manufactured by NIPPON AEROSIL CO., LTD.), fine powder obtained by modifying silica fine powder with polydimethylsiloxane (for example, product name: Aerosil RY300, manufactured by NIPPON AEROSIL CO., LTD.), hydrophobic fine powder silica obtained by treating fine powder silica with dimethyldichlorosilane (product name: Aerosil R972, manufactured by NIPPON AEROSIL CO., LTD.), and the like.

Examples of calcium carbonate include specifically Hakuenka CC, Hakuenka CCR, Hakuenka DD, Vigot10, Vigot15, and Hakuenka U manufactured by SHIRAISHI CALCIUM KAISHA, LTD., and the like.

Examples of magnesium oxide include specifically UC95S, UC95M, and UC95H manufactured by Ube Materials Industries, and the like.

Examples of magnesium hydroxide include specifically UD-650-1 and UD-653 manufactured by Ube Materials Industries, and the like.

The inorganic filler has an average particle diameter of preferably 1,000 $\mu$m or less, more preferably 200 $\mu$m or less, further preferably 100 $\mu$m or less, particularly preferably 75 $\mu$m or less, and most preferably 20 $\mu$m or less. On the other hand, an average particle diameter is preferably 5 nm or more, and more preferably 10 nm or more. The above-mentioned average particle diameter can be measured with a particle size analyzer using a light scattering method.

Examples of the hollow microballoon include a hollow balloon made of a glass such as a hollow glass balloon; a hollow balloon made of a metal compound such as a hollow alumina balloon; a hollow balloon made of porcelain such as a hollow ceramic balloon; and the like.

The hollow microballoon has the specific gravity of preferably 0.01 g/cm$^3$ or more, more preferably 0.05 g/cm$^3$ or more, and further preferably 0.1 g/cm$^3$ or more. Additionally, the specific gravity is preferably 0.8 g/cm$^3$ or less, more preferably 0.6 g/cm$^3$ or less, and further preferably 0.5 g/cm$^3$ or less.

Examples of a shape of particles of the inorganic filler include a fine powder shape, a powder shape, a particulate shape, a granular shape, a squamous shape, a polyhedron shape, a rod shape, a curved surface-containing shape, a hollow shape, and the like. In addition, particles having an average particle diameter in the above-mentioned range can be produced by a method of optimizing preparation conditions at a stage of producing particles, and obtaining (nano)particles of a desired particle diameter or the like, in addition to a method of grinding particles with a ball mill or the like, dispersing the resulting coarse particles in a dispersant to a desired particle diameter, followed by inspissation, and a method of sieving the coarse particles with a sieve or the like to select a particle diameter.

The inorganic filler has a specific surface area of preferably 0.01 $m^2$/g or more, and more preferably 0.5 $m^2$/g or more. Additionally, a specific surface area is preferably 500 $m^2$/g or less. A specific surface area can be measured with a specific surface area measuring device by a nitrogen adsorption BET method or the like.

The ratio of the inorganic filler is preferably 0.1% by volume or more, more preferably 1% by volume or more, further preferably 5% by volume or more, still preferably 10% by volume or more, and particularly preferably 30% by volume or more, based on 100% by volume of the expandable composition layer. On the other hand, the ratio of the inorganic filler is preferably 99.9% by volume or less, more preferably 90% by volume or less, further preferably 80% by volume or less, still preferably 60% by volume or less, and particularly preferably 50% by volume or less.

(7) Sheet-Like Fiber Substrate

As a sheet-like fiber substrate, the known ones can be used, and examples thereof include specifically a woven fabric, a non-woven fabric, a unidirectional cloth or the like obtained by weaving or fibrillating inorganic fibers such as a glass fiber and a carbon fiber, or organic fibers such as a polyester fiber, a polyamide fiber, an aramid fiber, a vinylon fiber, and a polyolefin fiber. It is preferable that the panel reinforcing material is constructed by laminating different two or more kinds of sheet-like fiber substrates selected from the known sheet-like fiber substrates as described above, and it is preferable that, further, at least one kind is a woven fabric or a unidirectional cloth of an inorganic fiber or an organic fiber, and is positioned on a one side surface layer of the panel reinforcing material.

The woven fabric or the unidirectional cloth of an inorganic fiber positioned on one side surface layer of the panel reinforcing material imparts toughness to a resin layer after curing (hereinafter, cured body layer), and is preferably sheet-like, and is formed of a material which is light, and can be closely contacted and integrated with the cured body layer, and as such a material, for example, a woven fabric of a carbon fiber having rigidity, a woven fabric of a glass fiber (glass cloth), or a unidirectionally reinforced cloth is used.

The glass cloth is a cloth prepared from a glass fiber, and more specifically, examples thereof include the known glass cloth in which glass fiber bundles of a plurality of glass filaments are woven. A woven structure in the glass cloth is, usually, generally plain weave, but is not limited to this, and for example, may be modified plain weave such as basket weave and rib weave, twill weave, satin weave or the like. Preferable is plain weave. Additionally, regarding the fiber count of a glass fiber bundle, scutching is performed such that the weight (basis weight) of the glass cloth before covering treatment with a resin is 150 to 300 g/$m^2$, and preferably 180 to 260 g/$m^2$. In addition, the weight of the glass cloth can be calculated by a measuring method in accordance with JIS R3420:2013 7.2. Additionally, in the thus woven glass cloth, usually, a thickness is 100 to 300 $\mu$m, and the air permeability is 2 to 20 cm$^3$/cm$^2$/sec. In addition, the air permeability can be calculated by a measuring method in accordance with JIS R3420:2013 7.13.

As the glass cloth, more specifically, for example, a glass cloth having the yarn count of a glass fiber bundle of 5 to 250 tex (tex count), a glass filament diameter of 3 to 13 $\mu$m, the bundle number of 100 to 800, the twist number of a glass fiber bundle of 0.1 to 5.0 times/25 mm, and the fiber count of a glass fiber bundle of 30 to 80 fibers/25 mm may be used. Additionally, in order to enhance fiber impregnability with an epoxy resin, the glass cloth may be treated with a silane coupling agent. As such a silane coupling agent, specifically, for example, vinyltrichlorosilane, vinyltriethoxysilane, vinyltris($\beta$-methoxyethoxy)silane, $\gamma$-methacryloxypropyltrimethoxysilane, $\gamma$-aminopropyltriethoxysilane, $\gamma$-anilinopropyltrimethoxysilane, N-$\beta$-aminoethyl-$\gamma$-aminopropyltrimethoxysilane, N-vinylbenzyl-aminoethyl-$\gamma$-aminopropyltrimethoxysilane (hydrochloride), $\gamma$-glycidoxypropyltrimethoxysilane, $\beta$-(3,4-epoxycyclohexyl)ethyltrimethoxysilane, $\gamma$-mercaptopropyltrimethoxysilane, $\gamma$-chloropropyltrimethoxysilane, and the like are used. These silane coupling agents may be used alone, or may be used concurrently. Among them, preferably, $\gamma$-glycidoxypropyltrimethoxysilane is used. An addition amount of this silane coupling agent to a glass cloth is, for example, 0.01 to 2% by weight, and preferably 0.05 to 0.5% by weight based on the glass cloth.

Further, an opening-treated glass cloth which has been weather-stripped to some extent, by weaving glass fiber bundles to obtain a glass cloth (including a glass cloth which has been addition treated with a sizing agent and a glass cloth which has been addition treated with a silane coupling agent), performing opening treatment such as ultrasound treatment with a high pressure water stream or in liquid, to widen the warp and the weft of a glass fiber bundle can also be used.

(8) Compound Containing Rubber or Rubber Component

The reinforcing material to be stuck to a metal panel used in a vehicle body of transportation equipment is required to have cold resistance and heat resistance. In winter, in cold places, a temperature of an exterior body panel may drop to about -20 to -10°C due to the environment outside a vehicle. For this reason, unless the expandable panel reinforcing material has cold resistance, under such low temperature atmosphere, brittleness of a resin becomes high, and the sufficient bending strength may not be obtained. Additionally, a temperature of an exterior body panel may arise to about 60 to 70°C due to the environment outside a vehicle in summer. For this reason, unless the expandable panel reinforcing material has heat resistance, under such high temperature atmosphere, a resin is softened, rigidity is reduced, and the sufficient bending strength may not be obtained, like under low temperature atmosphere.

Provision of the expandable panel reinforcing material in which both bending strengths under such high temperature atmosphere and low temperature atmosphere have a lower change rate as compared with that under ambient temperature (15 to 25°C) atmosphere is desired. In order to solve the above-mentioned problems, the present inventors found out that by making the expandable composition layer further contain a compound containing rubber or a rubber component (hereinafter, also referred to as rubber compound), there can be provided the expandable panel reinforcing material that when the expandable panel reinforcing material is stuck to a cold rolled steel plate having a thickness of 0.8 mm, and this is heated and integrated at 180°C to give a reinforced panel, the reinforced panel has a change rate of the maximum point strengths at -40°C and 80°C to the maximum point strength at 23°C of 25% or less, in three-point bending measured at a span of 100 mm under the temperature atmospheres of -40°C, 23°C, and 80°C. In this expandable panel reinforcing material, more stable strength maintenance can be expected in both of under the high temperature atmosphere and under the low temperature atmosphere. The change rate can take 1%, 2%, 5%, 8%, 10%, 15%, 20%, and 25%.

As the rubber compound, a compound can be used (i) which is phase-separated in the plastic component of the crosslinked polymer matrix in the expandable composition layer to be an island part of a sea-island structure, and (ii) which can exhibit a physical property that a change rate of the maximum point strengths at -40°C and 80°C to the maximum point strength at 23°C is 25% or less, in the maximum point strengths obtained by measuring a reinforced panel with three-point bending at a span of 100 mm under temperature atmospheres of -40°C, 23°C, and 80°C, the reinforced panel being obtained by sticking the expandable panel reinforcing material to a cold rolled steel plate having a thickness of 0.8 mm and integrating the expandable panel reinforcing material and the cold rolled steel plate under heat at 180°C.

The rubber compound may be chemically bound with the plastic component of the crosslinked polymer matrix at an interface of a sea-island structure. Additionally, in the above-mentioned compound, the rubber component may be chemically bound into a chemical structure thereof.

Examples of the rubber compound include epoxy resin dispersion of butadiene rubber particles, acrylic rubber particles, silicone rubber particles, and rubber polymer particles, a CTBN-modified epoxy resin, a silicone-modified epoxy resin, epoxidized polybutadiene, SBR, NBR, a polybutene rubber, and the like. The above-mentioned rubber component or the compound containing the rubber component may be any of solid, semi-solid, and liquid.

Particularly, it is preferable to use butadiene rubber particles and/or acrylic rubber particles.

An average particle diameter of rubber particles is preferably 0.01 to 5 $\mu$m, and more preferably 0.05 to 1 $\mu$m. When change in the viscosity due to swelling is considered, core shell-type rubber particles are most preferable. By adding butadiene rubber particles and/or acrylic rubber particles, the rubber component is not compatible with the plastic component of the crosslinked polymer matrix, and takes a phase separated structure, and accordingly, heat resistance of a resin layer is not reduced, and cold resistance can be improved. Furthermore, improvement in impact resistance due to toughness improvement or adhesion strength improvement can be expected.

Rubber particles which have been dispersed in an epoxy resin in advance may also be used. Specifically, rubber particles which have been dispersed in an epoxy resin with a mixing stirring device such as a hyper mixer and a homogenizer, and rubber particles which have been synthesized by emulsion polymerization in an epoxy resin correspond to this. An average particle diameter of rubber particles which have been finally formed by a procedure by emulsion polymerization is preferably 0.05 to 5 $\mu$m. By using rubber particles which have been dispersed in an epoxy resin in advance, there is an advantage that handling of components becomes simple at the time of production of a resin composition. Additionally, since an epoxy resin is sufficiently compatible with rubber particles, change in the viscosity when the time has elapsed tends to be small.

Examples of the above-mentioned butadiene rubber particles include Metablene E series and Metablene C series manufactured by MITSUBISHI RAYON CO., LTD., and the like. Examples of the above-mentioned acrylic rubber particles include MX series manufactured by Soken Chemical & Engineering Co., Ltd., Metablene W series manufactured by MITSUBISHI RAYON CO., LTD., ZEFIAC series manufactured by ZEON KASEI Co., Ltd., and the like. Examples of the epoxy resin in which rubber particles have been dispersed in advance include RKB series manufactured by Resinous Kasei Co., Ltd., Kane Ace series manufactured by Kaneka Corporation, butadiene rubber particles, and the like, but are not limited to them.

An addition amount of the rubber compound is preferably 1 to 50 parts by weight, based on 100 parts by weight of the expandable composition layer. When an addition amount is more than 50 parts by weight, rigidity tends to reduce, and when an addition amount is less than 5 parts by weight, the effect tends not to be manifested. Most preferably, an addition amount is 5 to 30 parts by weight.

Furthermore, it is preferable that the specific island part derived from rubber having a separation scale of 10 to 1,000 nm exists, in observation of a cross section of the panel reinforcing material after heat expansion and curing with use of an electron microscope, in the number of 10 or more in a range of 3,000 nm × 3,000 nm in a resin part. The number of specific island parts can take 10, 20, 30, 40, 50, 60, 70, and 100.

(9) Others

The additives which are known in the art such as a silane coupling agent, a stabilizer, a lubricant, a coloring agent, an ultraviolet absorbing agent, an antioxidant, an age resister, and a weathering stabilizer may be contained in the reinforcing material, as necessary.

(Method for Producing Reinforcing Material)

As for the reinforcing material, the crosslinked polymer matrix is obtained by polymerizing a monofunctional monomer having one polymerizable functional group and a polyfunctional monomer having two or more polymerizable functional groups with use of a polymerization initiator. Herein, polymerization is performed in the presence of the plastic component, the curing agent, the curing accelerator, the filler, the thermally decomposable blowing agent and, arbitrary, the rubber compound.

As the polymerization initiator, the known polymerization initiator depending on the energy such as heat, ultraviolet rays, and electron beams can be used. Additionally, particularly, a photopolymerization initiator which can initiate a polymerization reaction by the energy such as ultraviolet rays and electron beams is preferable. Polymerization initiators may be used alone, or two or more may be used by combining them.

Examples of the photopolymerization initiator include an oxime ester-based photopolymerization initiator, an alkylphenone-based photopolymerization initiator, an acylphosphine oxide-based photopolymerization initiator, and a titanocene-based photopolymerization initiator.

An addition amount of the photopolymerization initiator is preferably 0.1 to 2.0 parts by weight, based on 100 parts by weight of a mixture of the monofunctional monomer having one polymerizable functional group and the polyfunctional monomer having two or more polymerizable functional groups.

Examples of the oxime ester-based photopolymerization initiator include CGI-325, Irgacure OXE01, and Irgacure OXE02 manufactured by BASF Japan Ltd., N-1919 manufactured by ADEKA CORPORATION, and the like as a commercially available product.

Examples of the alkylphenone-based photopolymerization initiator include benzyl dimethyl ketal-based photopolymerization initiators such as 2,2-dimethoxy-1,2-diphenylethan-1-one; $\alpha$-hydroxyalkylphenone-based photopolymerization initiators such as 1-hydroxycyclohexyl phenyl ketone, 2-hydroxy-2-methyl-1-phenyl-propan-1-one, 1-[4-(2-hydroxyethoxy)-phenyl]-2-hydroxy-2-methyl-1-propan-1-one, and 2-hydroxy-1-{4-[4-(2-hydroxy-2-methyl-propionyl)-benzyl]phenyl}-2-methyl-propan-1-one; $\alpha$-aminoacetophenone-based photopolymerization initiators such as 2-methyl-1-[4-(methylthio)phenyl]-2-morpholinopropanone-1,2-benzyl-2-dimethylamino-1-( 4-morpholinophenyl)-butan-1-one, 2-(dimethylamino)-2-[(4-methylphenyl)methyl]-1-[4-(4-morpholinyl)phenyl]-1-butanone, and N,N-dimethylaminoacetophenone. Examples of a commercially available product of the benzyl dimethyl ketal-based photopolymerization initiator include Irgacure 651 manufactured by BASF Japan Ltd., and the like.

Examples of a commercially available product of the $\alpha$-hydroxyalkylphenone-based photopolymerization initiator include Irgacure 184, DAROCUR 1173, Irgacure 2959, and Irgacure 127 manufactured by BASF Japan Ltd., and the like. Examples of a commercially available product of the $\alpha$-aminoacetophenone-based photopolymerization initiator include Irgacure 907, Irgacure 369, and Irgacure 379 manufactured by BASF Japan Ltd., and the like.

Examples of the acylphosphine oxide-based photopolymerization initiator include 2,4,6-trimethylbenzoyldiphenylphosphine oxide, bis(2,4,6-trimethylbenzoyl)-phenylphosphine oxide, bis(2,6-dimethoxybenzoyl)-2,4,4-trimethylpentylphosphine oxide, and the like. Examples of a commercially available product include Lucirin TPO and Irgacure 819 manufactured by BASF Japan Ltd., and the like.

Examples of the titanocene-based photopolymerization initiator include bis(cyclopentadienyl)-diphenyl titanium, bis(cyclopentadienyl)-dichloro titanium, bis(cyclopentadienyl)-bis(2,3,4,5,6-pentafluorophenyl) titanium, bis(cyclopentadienyl)-bis(2,6-difluoro-3-(pyrrol-1-yl)phenyl) titanium, and the like. Examples of a commercially available product include Irgacure 784 manufactured by BASF Japan Ltd., and the like.

Specifically, the reinforcing material can be produced by passing through a step of molding a polymerizable composition comprising a monomer mixture comprising a monofunctional monomer and a polyfunctional monomer for forming a crosslinked polymer matrix, and a polymerization initiator, a plastic component, a curing agent, a curing accelerator, a filler, and a thermally decomposable blowing agent into a desired shape (molding step), and a step of polymerizing the monomer mixture in the polymerizable composition with a polymerization initiator (polymerization step).

(a) Molding Step

Molding into the reinforcing material is not particularly limited, but the known method can be adopted. Examples thereof include a method of casting the polymerizable composition into a mold having a desired shape. Examples of another method include a method of casting the polymerizable composition between two protective films consisting of a resin film, and retaining it at a constant thickness.

The sheet-like fiber layer can be contained in the reinforcing material, for example, as follows. Examples include a method of arranging the sheet-like fiber layer in a mold before, during and after casting, when the polymerizable composition is cast into a mold in the molding step. Additionally, examples also include a method of placing the sheet-like fiber layer on the reinforcing material, and placing another reinforcing material thereon, thereby, sandwiching the sheet-like fiber layer with one pair of reinforcing materials.

(b) Polymerization Step

The molded polymerizable composition becomes a reinforcing material by polymerizing the monomer mixture therein. Examples of polymerization include a free radical polymerization reaction, a living radical polymerization reaction, a living anion polymerization reaction, and the like. The above-mentioned polymerization reaction can be initiated, for example, by imparting the energy such as heat, ultraviolet rays, and electron beams.

(Method for Reinforcing Panel)

A reinforcing method includes the steps of sticking the above-mentioned reinforcing material to a panel to temporarily fixing the reinforcing material and the panel (temporary fixing step); and subjecting the reinforcing material to curing by heating the reinforcing material before or after pressure-sensitive adhesion to fix the reinforcing material and the panel (fixing step). The temporary fixing step utilizes a pressure-sensitive adhesive force of the reinforcing material, and the fixing step utilizes an adhesive force. This temporary fixing step is also possible even when removal of a rust-preventing agent which usually exists on a surface of the panel is not particularly performed. Heating of the reinforcing material is not particularly limited as far as it is in such a range that a resin is not thermally decomposed, and a temperature is a decomposition temperature T°C of the blowing agent or higher. When a heating temperature is lower than T°C, expansion may be insufficient.

In addition, the panel is not particularly limited, as far as it is desired to be reinforced by thinning. Examples thereof include transportation equipment (for example, exterior materials for automobile such as door and roof, underfloor side closing plate and underfloor lower closing plate for vehicle (for example, Shinkansen line)), robot members (for example, arm, feed bar, and the like), house construction materials (external wall tile), a carbon fiber-reinforced resin plate, a steel plate, and an aluminum plywood in metal cases or the like, and the like. This reinforcing method is useful for panels having a thickness of 3 mm or less. Additionally, since transportation equipment and the like constructed of a reinforced panel are reduced in weight as compared with equipment and the like constructed of a non-reinforced panel exhibiting the equivalent bending strength to that of a reinforced panel, the energy required for driving and transportation can be reduced.

EXAMPLES

The present invention will be specifically illustrated by way of Examples and Comparative Examples, but the present invention is not limited by these Examples. First, measuring methods in Examples and Comparative Examples will be illustrated.

(Decomposition Temperature T)

A decomposition temperature of the thermally decomposable blowing agent was obtained by a method in accordance with JIS K0064:1992.

(Storage Elastic Modulus G' (Pa) at 150°C ((Decomposition Temperature T) - 10°C) of Expandable Composition Layer)

The dynamic viscoelasticity was measured with a viscoelasticity measuring apparatus PHYSICA MCR301 (manufactured by Anton Paar) and a temperature control system CTD450. A discoidal reinforcing material having a diameter of 25 mm (±1 mm) and a thickness of 1 mm (±0.1 mm) before curing was held between plates of the viscoelasticity measuring apparatus set at a measurement initiation temperature, and was adjusted at a measurement position at a normal force of 0.03 to 0.1 N. Furthermore, after a measurement initiation temperature ±1°C was retained for 5 minutes, a strain was set at 1%, a frequency was changed from 10 Hz to 1 Hz by logarithmic rise and fall in a range of a temperature of 23°C to 180°C, and the dynamic viscoelasticity was measured in a range of 23°C to 180°C under the conditions of a temperature raising rate of 15°C/min, the nitrogen atmosphere, a measurement interval of 30 seconds, and a constant normal force of 0 N to measure the storage elastic modulus G'. In addition, as a plate, a disposable φ 25 mm parallel disk and a disposable dish were used.

(Expansion Ratio)

The expansion ratio was obtained from results of measurement of the density of the reinforcing material before and after heat expansion and curing according to the following equation.

$$(\text{Expansion ratio}) = (\text{density of reinforcing material before heat expansion and} \\ \text{curing})/(\text{density of reinforcing material after heat expansion and curing})$$

(Pressure-Sensitive Adhesive Force)

A reinforcing material was cut into 2 × 2 cm, and with a surface opposite to a surface on which a woven fabric substrate positioned on a surface layer of the reinforcing material for measurement exits being upside, another surface of a gel sheet was stuck to a SUS plate fixed with a double-sided tape (No. 5486 manufactured by Sliontec Ltd.), using a double sided tape (No. 5486 manufactured by Sliontec Ltd.). A probe tack test was performed using a texture analyzer TX-AT (manufactured by EKO Instruments). As a probe, a probe made of SUS having a diameter of 10 mm was used. After a load of 500 g was applied to a pressure-sensitive adhesive surface of the probe for 10 seconds, a maximum load (N) at which the probe was peeled at a rate of 1 mm/sec was measured. A pressure-sensitive adhesive force was defined as a value obtained by dividing a maximum load (N) by an area of the pressure-sensitive adhesive surface (N/mm$^2$).

(Bending Strength and Strain Energy)

A release paper of each of expandable panel reinforcing materials of each Example and each Comparative Example was peeled, each expandable panel reinforcing material was stuck to an oily surface cold rolled steel plate (SPCC-SD) of 25 mm width × 150 mm length × 0.8 mm thickness (manufactured by Nippon Testpanel Co., Ltd.), respectively, under the 20°C atmosphere, and this was heated at 180°C for 20 minutes to cure a plasticizer component, to prepare a test piece.

Thereafter, in the state where the steel plate becomes upward, each test piece was supported at a span of 100 mm, a bar for a test was fallen from an upper side in a vertical direction at a compression rate of 5 mm/min at a center in a longitudinal direction thereof, and, after contact with the steel plate, the bending strength (N) at a 1 mm displacement and a maximum point (N) of the bending strength of an expanded body layer were measured. Additionally, with only an oily surface cold rolled steel plate (SPCC-SD) having a thickness of 0.8 mm, a three-point bending strength test was performed similarly, and after contact with the steel plate, the bending strengths (N) at a 1 mm displacement and at a 2 mm displacement, and the breaking (maximum) point strength (N) were measured.

Additionally, from a stress-strain curve obtained in the three-point bending strength test, an area value calculated by integration in an integration range from a strain 0 (mm) to a breaking point strain (mm) was defined as the strain energy (N·m).

(Reinforcing Material Basis Weight)

Each of the panel reinforcing materials of each Example and each Comparative Example was cut into width 25 mm and length 150 mm, and the weight of this was measured with an electronic balance, and converted into the weight per 1 m$^2$, thereby, the reinforcing material basis weight (g/m$^2$) was calculated.

(Observation of Phase Separated Structure of Rubber Compound and Number Counting of Specific Island Part with Transmission Electron Microscope (TEM))

A piece of a resin layer was excised from a sample after heat expansion and curing of an expandable panel reinforcing material, the piece was fixed on a sampling stage, and thereafter, an ultrathin piece (thickness 70 nm) was prepared using a "LEICA ULTRACUT UCT" ultra microtome manufactured by Leica Microsystems. Then, a resin layer cross section of the ultrathin piece was photographed with a "H-7600" transmission electron microscope manufactured by Hitachi High-Technologies Incorporation by "ER-B" CCD camera system manufactured by AMT Incorporated, and a phase separated structure (sea-island structure) of a rubber component was observed. Island parts derived from the rubber component (specific island parts) having a phase separation scale of 10 to 1,000 nm, existing per an area of 3,000 nm × 3,000 nm were counted from a cross-sectional photograph. As a staining agent at the time of preparation of the ultrathin piece, osmium tetroxide was used.

(Examples 1 to 4)

A polyfunctional monomer, a monofunctional monomer, and a photopolymerization initiator Irgacure 819 were dissolved to prepare a monomer mixture. Then, an epoxy resin, a curing agent, a curing accelerator, a filler (finely pulverized silica, calcium carbonate), and a thermally decomposable blowing agent were added to the monomer mixture to obtain a resin composition for polymerization for producing a panel reinforcing material. Kinds and amounts (parts by weight) of the polyfunctional monomer, the monofunctional monomer, the photopolymerization initiator, the epoxy resin, the curing agent, the curing accelerator, the filler, and the thermally decomposable blowing agent are shown in Table 1.

Then, a mold was placed on a silicone-coated release film (100 μm thickness PET). A resin composition was cast into the mold, a filling-treated plain weave glass cloth (stock number: EH2101-CKU, MOLYMER SSP Co., Ltd.) was placed thereon, furthermore, a silicone-coated release film (100 μm thickness PET) was placed, and the resin composition was uniformly spread. Thereafter, UV was irradiated with a small-type UV polymerization machine (J-cure1500 manufactured by JATEC Co., Ltd., metal halide lamp type name MJ-1500L) so that an integrated light amount at a wavelength of 300 to 390 nm became about 5,000 mJ/cm$^2$, thereby, a reinforcing material was obtained.

(Comparative Examples 1 and 2)

An epoxy resin, an acrylonitrile and butadiene rubber, a styrene and butadiene rubber, a polybutene rubber, and a filler (talc, calcium carbonate, and carbon black) were mixed according to formulation based on parts by weight of Table 2, and kneaded with a kneader at 120°C for 1 hour, a kneader temperature was lowered to 70°C, and a curing agent, a curing accelerator, and a blowing agent were added, and further kneaded for 1 hour. Kinds and amounts of the acrylonitrile and butadiene rubber, the styrene and butadiene rubber, the polybutene rubber, talc, calcium carbonate, carbon black, the curing agent, the curing accelerator, and the blowing agent are shown in Table 2. The kneading product was taken out, and pressed with a pressing machine to mold it into a sheet. A filling-treated plain weave glass cloth (stock number: EH2101-CKU, manufactured by MOLYMER SSP Co., Ltd.) was stuck to one side of the sheet, and this was further molded with a pressing machine to obtain a reinforcing material.

In addition, illustration of abbreviations and the like in Tables 1 and 2 is shown below.

- jER828: Bisphenol A-type epoxy resin, product name "jER828", epoxy equivalent 180 g/eqiv., viscosity 13,500 mPa·s, manufactured by Mitsubishi Chemical Corporation
- DICY: Dicyanodiamide, product name "DICY7" manufactured by Mitsubishi Chemical Corporation
- DCMU: 3-(3,4-Dichlorophenyl)-N,N-dimethylurea, product name "DCMU99", manufactured by HODOGAYA CHEMICAL CO., LTD.
- DMAAm: N,N-dimethylacrylamide, Tg = about 120°C, manufactured by KJ Chemicals Corporation
- P2HA: Phenoxy diethylene glycol acrylate, product name "Light acrylate P2HA", Tg = about -20°C, manufactured by KYOEISHA CHEMICAL Co., Ltd.
- 1.6HDDA: 1,6-Hexanediol diacrylate, product name "A-HD-N", manufactured by SHIN-NAKAMURA CHEMICAL CO., LTD.
- IRGACURE 819: Bis(2,4,6-trimethylbenzoyl)-phenylphosphine oxide, manufactured by BASF
- Aerosil R972: Hydrophobic fumed silica, specific surface area 110 ± 20 (m$^2$/g), product name "Aerosil R972" manufactured by EVONIK
- Hakuenka CC: Calcium carbonate, product name "Hakuenka CC" manufactured by SHIRAISHI KOGYO KAISHA, LTD.
- OBSH: 4,4'-Oxybis(benzenesulfonyl hydrazide), decomposition temperature 160°C, product name "Celmike SX", manufactured by SANKYO KASEI Co., Ltd.
- NBR rubber: Acrylonitrile and butadiene rubber, product name "Nipol1042", acrylonitrile content 33.5% by weight, Mooney viscosity 77.5 (ML1+4, 100°C), manufactured by ZEON CORPORATION
- SBR rubber: Styrene and butadiene rubber, product name "Asaprene T-411", styrene content 30%, manufactured by Asahi Kasei Corporation
- HV-300: Polybutene rubber, product name "Nisseki Polybutene HV-300", number average molecular weight 1,400, manufactured by JX Nikko Nisseki Energy Co., Ltd.
- Carbon black #3050B: Furnace black, product name "#3050B", average primary particle diameter about 0.04 to

0.05 $\mu$m, specific surface area 50 m$^2$/g (BET method) manufactured by Mitsubishi Chemical Corporation

[Table 1]

| | | | | Examples | | | |
|---|---|---|---|---|---|---|---|
| | | | | 1 | 2 | 3 | 4 |
| Panel reinforcing material | Expandable composition layer | Epoxy resin | jER828 | 120 | 120 | 120 | 120 |
| | | Curing agent | DICY | 7.5 | 7.5 | 7.5 | 7.5 |
| | | Curing accelerator | DCMU | 1.5 | 1.5 | 1.5 | 1.5 |
| | | Monofunctional monomer | DMAAm | 30 | 40 | 30 | 30 |
| | | | P2HA | 70 | 60 | 70 | 70 |
| | | Polyfunctional monomer | 1.6HDDA | 0.1 | 0.1 | 0.3 | 0.1 |
| | | Photopolymerization initiator | IRGACURE819 | 0.3 | 0.3 | 0.3 | 0.3 |
| | | Finely pulverized silica | Aerosil R972 | 10 | 10 | 10 | 10 |
| | | Calcium carbonate | Hakuenka CC | 20 | 20 | 20 | 20 |
| | | Thermally decomposable blowing agent | OBSH | 1.75 | 3.5 | 5.25 | 8.75 |
| | Sheet-like fiber layer | | | Plain weave glass cloth EH2101-CKU | | | |
| Thickness of reinforcing material before heating (mm) | | | | 1.5 | 1.4 | 1.4 | 1.4 |
| Reinforcing material basis weight (g/m$^2$) | | | | 1,671 | 1,760 | 1,724 | 1,680 |
| Pressure-sensitive adhesive force (N/mm$^2$) | | | | 0.26 | 0.42 | 0.29 | 0.33 |
| Storage elastic modulus G' (Pa) at 150°C ((decomposition temperature T) - 10°C) of expandable composition layer | | | | 551 | 758 | 1,655 | 519 |
| Expansion ratio (fold) | | | Target | 2 | 3 | 4 | 6 |
| | | | Actually measured value | 2.1 | 3.9 | 4.8 | 6.2 |
| Three-point bending strength (N) | | | 1 mm displacement | 31 | 60 | 69 | 84 |
| | | | 2 mm displacement | 58 | 118 | 135 | 166 |
| | | | Breaking point | 300 | 386 | 467 | 416 |
| Strain energy (N·m) | | | | 2.35 | 1.50 | 2.00 | 1.29 |

[Table 2]

| | | | | Comparative Examples | |
|---|---|---|---|---|---|
| | | | | 1 | 2 |
| Panel reinforcing material | Expandable composition layer | Epoxy resin | jER828 | 80 | 80 |
| | | Curing agent | DICY | 5 | 5 |
| | | Curing accelerator | DCMU | 1 | 1 |
| | | NBR rubber | Nipol1042 | 20 | 20 |
| | | SBR rubber | T411 | 5 | 5 |
| | | Polybutene rubber | HV-300 | 10 | 10 |
| | | Talc | Crown Talc | 100 | 100 |
| | | Calcium carbonate | Hakuenka CC | 50 | 50 |
| | | Carbon black | #3050B | 1 | 1 |
| | | Thermally decomposable blowing agent | OBSH | 18 | 8 |
| | Sheet-like fiber layer | | | Plain weave glass cloth EH2101-CKU | |
| Thickness of reinforcing material before heating (mm) | | | | 1.83 | 1.79 |
| Reinforcing material basis weight (g/m²) | | | | 1,573 | 1,493 |
| Pressure-sensitive adhesive force (N/mm²) | | | | 0.21 | 0.19 |
| Storage elastic modulus G' (Pa) at 150°C ((decomposition temperature T) - 10°C) of expandable composition layer | | | | 21,600 | 17,816 |
| Expansion ratio (fold) | | Target | | 10 | 5 |
| | | Actually measured value | | 2.2 | 1.9 |
| Three-point bending strength (N) | | 1 mm displacement | | 26 | 23 |
| | | 2 mm displacement | | 52 | 44 |
| | | Breaking point | | 128 | 110 |
| Strain energy (N·m) | | | | 1.50 | 1.62 |

From Tables 1 and 2, it is seen that Examples 1 to 4 ensure lightness and the bending strength, has a great breaking strain, and can impart toughness to the panel by heat curing, while showing a sufficient temporary adhesive force due to pressure-sensitive adhesiveness of the initial state. Furthermore, it is seen that reinforcement of the steel plate with reinforcing materials of Examples 1 to 4 is possible even when a rust-preventing oil is not removed from the steel plate.

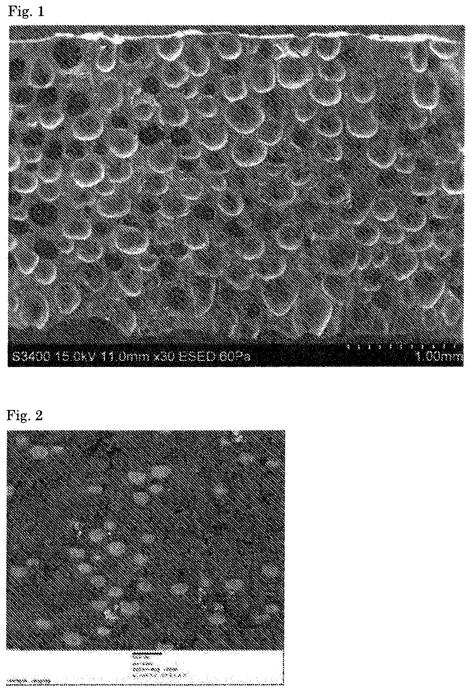

A cross-sectional SEM photograph (scanning electron microscope) of the resulting heat expansion and curing product of the expandable panel reinforcing material described in Example 1 is shown in Fig. 1. From Fig. 1, it is seen that in Example 1, an expanded body having a closed-cell structure of a cell diameter of 200 to 300 $\mu$m (average cell diameter 248 $\mu$m) is obtained.

In addition, an average cell diameter was measured by the following procedure.

Regarding an average cell diameter of the heat expansion and curing product of the expandable panel reinforcing material, a block-like sample was cut out from a heat expansion and curing product layer, a photograph of a sample cross section was taken with a scanning electron microscope (manufactured by Hitachi High-Technologies Corporation, type name "S-3400N") at magnification of 10 to 400, a cell diameter of 20 or more closed cells was measured, and an arithmetic average was expressed as an average cell diameter.

From Fig. 1, since cells are cells in which there are not penetrating between adjacent cells, and a boundary between a cell part and a solid phase part is a closed surface containing a cell part inside thereof, it is possible to state that this cell part is a closed cell not communicating with a space on a heat insulating external side.

(Example 5)

According to the same manner as that of Example 1, a reinforcing material was obtained. Preparation of a test piece under the conditions described in the above-mentioned "(Bending Strength and Strain Energy)", and measurement of the bending strengths (N) at a 1 mm displacement and at a 2 mm displacement and the bending strength (N) at a breaking point of the test piece were performed, except that the resulting reinforcing material was used, and the oily surface cold rolled steel plate was changed to an oily surface cold rolled steel plate of 25 mm width × 150 mm length × 0.6 mm thickness (SPCC-SD) (manufactured by TP Giken Co., Ltd.). In addition, also in Example 5, sticking of the reinforcing material to the steel plate was performed without removing a rust-preventing agent.

Additionally, the weight of the test piece was measured with an electronic balance, and a measured value was converted into the weight per 1 m$^2$, thereby, the test piece basis weight (g/m$^2$) was calculated.

(Comparative Example 3)

Measurement of the bending strengths (N) at a 1 mm displacement and at a 2 mm displacement of the test piece under the conditions described in the above-mentioned "(Bending Strength and Strain Energy)" was performed, except that the reinforcing material was not used, and the test piece was changed to an oily surface cold rolled steel plate of 25 mm width × 150 mm length × 1.6 mm thickness (SPCC-SD) (manufactured by TP Giken Co., Ltd.). In addition, since the test piece is buckled, but is not broken, a breaking point could not be measured. For that reason, the bending strength (N) when buckled was measured as a maximum point of a displacement.

Additionally, the weight of the test piece was measured with an electronic balance, and a measured value was converted into the weight per 1 m$^2$, thereby, the test piece basis weight (g/m$^2$) was calculated.

[Table 3]

|  |  | Example 5 | Comparative Example 3 |
|---|---|---|---|
| Test piece basis weight [g/m$^2$] |  | 6,384 | 12,373 |
| Three-point bending strength [N] | 1 mm displacement | 40 | 55 |
|  | 2 mm displacement | 83 | 99 |
|  | Breaking (maximum) point | 179 | 169 |

From Table 3, it is seen that the basis weight of the test piece reinforced with the reinforcing material of Example 5 is about a half of the basis weight of the not reinforced test piece of Comparative Example 3, which exhibits the same extent of a maximum point as a breaking point of the test piece of Example 5. This result shows that the reinforcing material of Example 5 enables considerable reduction in the weight of a member constructed of a metal panel without reducing the bending strength (while suppressing deflection).

(Examples 6 to 10)

A polyfunctional monomer, a monofunctional monomer, and a photopolymerization initiator Irgacure 819 were dissolved to prepare a monomer mixture. Then, an epoxy resin, a curing agent, a curing accelerator, a rubber compound, a filler (finely pulverized silica, calcium carbonate), and a thermally decomposable blowing agent were added to the monomer mixture to obtain a resin composition for polymerization for producing a panel reinforcing material. Kinds and weights (parts by weight) of the polyfunctional monomer, the monofunctional monomer, the photopolymerization initiator, the epoxy resin, the curing agent, the curing accelerator, the filler, and the thermally decomposable blowing agent are shown in Table 4.

Then, a mold was placed on a silicone-coated release film (100 μm thickness PET). A resin composition for polymerization was cast into the mold, a filling-treated plain weave glass cloth (stock number: EH2101-CKU, manufactured by MOLYMER SSP Co., Ltd.) was placed thereon, and further, a silicone-coated release film (100 μm thickness PET) was placed, and the resin composition was uniformly spread. Then, ultraviolet rays under the conditions that an integrated light amount at a wavelength of 300 to 390 nm became 5,000 mJ/cm$^2$ were irradiated to the composition for polymerization with a curing apparatus manufactured by Fusion Co., Ltd. using an electrodeless discharge lamp, thereby, a panel reinforcing material was obtained.

Various physical properties of the resulting panel reinforcing material are shown in Table 4.

(Comparative Example 4)

An epoxy resin, an acrylonitrile and butadiene rubber, a styrene and butadiene rubber, a polybutene rubber, a filler (talc, calcium carbonate, and carbon black), and a lubricant (zinc stearate) were mixed according to formulation based on parts by weight of Table 5, and kneaded with a kneader at 120°C for 1 hour, a kneader temperature was lowered to 70°C, and a curing agent, a curing accelerator, and a blowing agent were added, and further kneaded for 1 hour. Kinds and amounts of the acrylonitrile and butadiene rubber, the styrene and butadiene rubber, the polybutene rubber, talc, calcium carbonate, carbon black, zinc stearate, the curing agent, the curing accelerator, and the blowing agent are shown in Table 5. The kneading product was taken out, and pressed with a pressing machine to mold it into a sheet. A filling-treated plain weave glass cloth (stock number: EH2101-CKU, manufactured by MOLYMER SSP Co., Ltd.) was stuck to one surface of the sheet, and this was further molded with a pressing machine to obtain a panel reinforcing material.

In addition, illustration of abbreviations and the like in Tables 4 and 5 will be shown below. Abbreviations and the like other than those described below are described at an illustration place of abbreviations and the like of Tables 1 and 2.

- EPU1395: Urethane-modified epoxy resin ("ADEKA RESIN EPU1395" manufactured by ADEKA CORPORATION)
- EPR-2000: NBR-modified epoxy resin, ("ADEKA RESIN EPR2000" manufactured by ADEKA CORPORATION)
- BPA328: Acrylic rubber fine particles-dispersed bisphenol A-type epoxy resin ("ACRYSET BPA-328" manufactured by NIPPON SHOKUBAI CO., LTD.)
- MX-154, 257: Butadiene rubber fine particles-dispersed bisphenol A-type epoxy resin ("Kane Ace MX-154" manufactured by Kaneka Corporation)
- Nipol1042: Acrylonitrile and butadiene rubber, product name "Nipol1042", acrylonitrile content 33.5% by weight, Mooney viscosity 77.5 (ML1+4, 100°C), manufactured by ZEON CORPORATION
- R972: Hydrophobic fumed silica, specific surface area $110 \pm 20$ ($m^2$/g), product name "Aerosil R972"manufactured by EVONIK
- QCEL5020: Hollow sodium borosilicate glass beads, average particle diameter 60 $\mu$m, manufactured by Potters Ballotini Co., Ltd.

[Table 4]

| | | | | Examples | | | | |
|---|---|---|---|---|---|---|---|---|
| | | | | 6 | 7 | 8 | 9 | 10 |
| Panel reinforcing material | Expandable composition layer | Epoxy resin | jER828 | 20 | 20 | 78 | 78 | 75 |
| | | | BPA328 | 100 | 100 | | | |
| | | | MX154 | | | 42 | 42 | |
| | | | MX257 | | | | | 45 |
| | | Curing agent | DICY | 6.5 | 6.5 | 6.5 | 6.5 | 6.5 |
| | | Curing accelerator | DCMU | 1.3 | 1.3 | 1.3 | 1.3 | 1.3 |
| | | Monofunctional monomer | DMAAm | 28.6 | 28.6 | 28.6 | 28.6 | 28.6 |
| | | | P2HA | 19.0 | 19.0 | 19.0 | 19.0 | 19.0 |
| | | Polyfunctional monomer | 1.6HDDA | 0.06 | 0.06 | 0.06 | 0.06 | 0.06 |
| | | Photopolymerization initiator | IRGACURE819 | 0.19 | 0.19 | 0.19 | 0.19 | 0.19 |
| | | Finely pulverized silica | Aerosil R972 | 7.6 | 7.6 | 7.6 | 7.6 | 7.6 |
| | | Calcium carbonate | Hakuenka CC | 15.2 | | | | |
| | | Glass particles | QCEL5020 | | 15.2 | 15.2 | 30.4 | 15.2 |
| | | Thermally decomposable blowing agent | OBSH | 1.33 | 1.75 | 1.75 | 2.36 | 1.75 |
| | Sheet-like fiber layer | | | Plain weave glass cloth EH2101-CKU | | | | |
| Thickness of reinforcing material before heating (mm) | | | | 1.3 | 2 | 1.3 | 1.3 | 1.3 |
| Reinforcing material basis weight (g/m²) | | | | 1,573 | 1,451 | 1,141 | 987 | 1,131 |
| Storage elastic modulus G' (Pa) at 150°C ((decomposition temperature T) - 10°C) of expandable composition layer | | | | 1,450 | 2,020 | 830 | 1,520 | 901 |
| Expansion ratio (fold) | | | Actually measured value | 1.7 | 1.5 | 2.6 | 1.6 | 2.4 |
| Three-point bending strength (N) (23°C) | | | 1 mm displacement | 27 | 33 | 38 | 35 | 41 |
| | | | 2 mm displacement | 54 | 76 | 76 | 74 | 82 |
| | | | Breaking point | 242 | 356 | 293 | 248 | 304 |
| Three-point bending strength (N) (-40°C) | | | Maximum point (-40°C) | 238 | 326 | 326 | 220 | 307 |
| | | | Change rate (%) from maximum point strength at 23°C | 1.6 | 8.4 | 11.2 | 11.3 | 1.0 |
| Three-point bending strength (N) (80°C) | | | Maximum point (80°C) | 227 | 348 | 292 | 221 | 281 |
| | | | Change rate (%) from maximum point strength at 23°C | 6.0 | 2.2 | 0.3 | 10.8 | 7.6 |
| Number of island parts derived from rubber component | | | | 24 | 33 | 102 | 92 | 70 |

[Table 5]

| | | | | Comparative Example 4 |
|---|---|---|---|---|
| Panel reinforcing material | Expandable composition layer | Epoxy resin | jER828 | 80 |
| | | Curing agent | DICY | 5 |
| | | Curing accelerator | DCMU | 1 |
| | | NBR rubber | Nipol1042 | 20 |
| | | SBR rubber | T411 | 5 |
| | | Polybutene rubber | HV-300 | 10 |
| | | Talc | Crown Talc | 100 |
| | | Calcium carbonate | Hakuenka CC | 50 |
| | | Carbon black | #3050B | 1 |
| | | Lubricant | Zinc stearate | 0.3 |
| | | Thermally decomposable blowing agent | OBSH | 5.5 |
| | Sheet-like fiber layer | | | Plain weave glass cloth EH2101-CKU |
| Thickness of reinforcing material before heating (mm) | | | | 1.96 |
| Reinforcing material basis weight (g/m$^2$) | | | | 1,610 |
| Storage elastic modulus G' (Pa) at 150°C ((decomposition temperature T) - 10°C) of expandable composition layer | | | | 13,400 |
| Expansion ratio (fold) | | | Actually measured value | 1.68 |
| Three-point bending strength (N) (23°C) | | | 1 mm displacement | 25 |
| | | | 2 mm displacement | 50 |
| | | | Breaking point | 163 |
| Three-point bending strength (N) (-40°C) | | | Maximum point (-40°C) | 223 |
| | | | Change rate (%) from maximum point strength at 23°C | 36.8 |
| Three-point bending strength (N) (80°C) | | | Maximum point (80°C) | 112 |
| | | | Change rate (%) from maximum point strength at 23°C | 31.3 |

From Tables 4 and 5, it is seen that Examples 6 to 10 ensure the lightness and the bending strength, has a great breaking strain, and can impart toughness to the panel by heat curing, while showing a sufficient temporary adhesive force by pressure-sensitive adhesiveness of the initial state. Furthermore, it is seen that the reinforcing materials of Examples 6 to 10 have sufficient cold resistance and heat resistance.

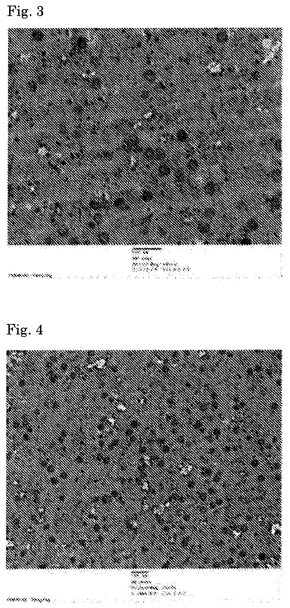

Cross-sectional TEM photographs of the resulting expandable panel reinforcing materials after heat expansion and curing described in Examples 6, 8, and 10 are shown in Figs. 2 to 4. From these figures, it is seen that Examples 6, 8, and 10 contain a specific island part at a phase separation scale of 10 to 1,000 nm, and the specific island part exists at the number of 10 or more in a range of 3,000 nm × 3,000 nm, in cross-sectional photographs of the panel reinforcing materials after heat expansion and curing using an electron microscope.

The above-mentioned reinforcing materials obtained in Examples and Comparative Examples were cut into 100 mm width × 100 mm length, stuck to an oily surface cold rolled steel plate (SPCC-SD) of 100 mm width × 100 mm length × 0.8 mm thickness (manufactured by TP Giken Co., Ltd.), and preparation of a test piece under the conditions described in the above-mentioned "(Bending Strength)" was performed. Using a falling weight type impact testing device CEAST9350 (manufactured by Tiast) as a testing device, impact was added to a steel plate side of a test piece as a hitting surface. A testing rate was set at 3.96 m/sec, a falling weight load was set at 4.3 kg, a tap tip used was set at φ 12.7 mm, and a test temperature was set at room temperature. In addition, after the test piece was subjected to conditioning under the standard atmosphere of JIS K 7100:1999, Symbol "23/50" (temperature 23°C, relative humidity 50%), Class 2 over 24 hours or longer, and measurement was performed under the same standard atmosphere (hereinafter, displacement measuring method). A difference (mm) in a height in a vertical direction between a point at which deformation of the test piece after hitting is greatest and each point of four corners of the test piece was measured with a 3D shape measuring machine VR-3200 manufactured by KEYENCE CORPORATION, and an arithmetic average value of a difference (mm) in a height in a vertical direction between a point at which deformation of the test piece after hitting is greatest and each point of four corners of the test piece was defined as impact displacement (mm).

An impact displacement of the test piece reinforced with the panel reinforcing material to an impact displacement (mm) of an oily surface cold rolled steel plate (SPCC-SD) alone of 100 mm width $\times$ 100 mm length $\times$ 0.8 mm thickness, to which the reinforcing material is not stuck, was shown as the displacement suppressing effect at the time of impact.

[Table 6]

|  | Panel reinforcing material | Impact displacement suppressing effect (%) |
| --- | --- | --- |
| Example 11 | Example 6 | 89.48 |
| Example 12 | Example 8 | 86.50 |
| Example 13 | Example 10 | 88.82 |
| Comparative Example 5 | Comparative Example 4 | 96.00 |

From the results in Table 6, it is seen that in the panel reinforcing materials of Examples 11 to 13, impact resistance of the panel is improved.

## Claims

1. An expandable panel reinforcing material, comprising an expandable composition layer comprising at least a plastic component of a crosslinked polymer matrix having curability, a curing agent of said plastic component, a curing accelerator of said plastic component, a crosslinked polymer matrix, a filler, and a thermally decomposable blowing agent having a decomposition temperature of T°C, and a sheet-like fiber layer that is laminated on said expandable composition layer, wherein
said expandable composition layer exhibits a storage elastic modulus (G') of $1 \times 10^1$ to $1 \times 10^4$ Pa when the storage elastic modulus (G') is measured with a dynamic viscoelasticity measuring apparatus [provided that a measuring temperature is (T - 10)°C].

2. The expandable panel reinforcing material according to claim 1, wherein said thermally decomposable blowing agent is selected from azodicarbonamide, azobisisobutyronitrile, barium azodicarboxylate, nitrodiguanidine, N,N'-dinitrosopentamethylenetetramine, N,N'-dimethyl-N,N'-dinitrosoterephthalamide, P,P'-oxybis(benzenesulfonyl hydrazide), hydrazodicarbonamide, paratoluenesulfonyl hydrazide, diphenylsulfone-3,3'-disulfonyl hydrazide, allyl-bis(sulfonyl hydrazide), p-toluylenesulfonyl semicarbazide, 4,4'-oxybis(benzenesulfonyl semicarbazide), 5-phenyl-1,2,3,4-tetrazole, sodium bicarbonate, ammonium carbonate, and anhydrous sodium nitrate, and is contained in an amount of 0.1 to 10 parts by weight, based on 100 parts by weight of said expandable composition layer.

3. The expandable panel reinforcing material according to claim 1, wherein when being subjected to heat expanding and curing at (T + 20)°C for 20 minutes, said expandable panel reinforcing material exhibits an expansion ratio of 1.5 to 10.

4. The expandable panel reinforcing material according to claim 1, wherein when said expandable panel reinforcing material is formed into a reinforced panel by sticking the expandable panel reinforcing material to a cold rolled steel plate having a thickness of 0.8 mm and subjecting the expandable panel reinforcing material to heat expanding and curing at (T + 20)°C for 20 minutes, the reinforced panel exhibits to said cold rolled steel plate the following nature: in three-point bending measured at a span of 100 mm,

    (i) strength at a 1 mm displacement is 25 N or more,
    (ii) strength at a 2 mm displacement is 50 N or more, and
    (iii) strain energy up to a breaking point is 0.5 N·m or more.

5. The expandable panel reinforcing material according to claim 1, wherein said expandable panel reinforcing material exhibits a pressure-sensitive adhesive force of 0.01 to 0.5 N/mm$^2$.

6. The expandable panel reinforcing material according to claim 1, wherein said sheet-like fiber layer is a woven fabric or a unidirectional cloth of an inorganic fiber or an organic fiber and is positioned on a one side surface layer of the expandable panel reinforcing material.

7. The expandable panel reinforcing material according to claim 1, wherein said crosslinked polymer matrix is a copolymer of a monofunctional monomer having one polymerizable functional group and a polyfunctional monomer having two or more polymerizable functional groups.

8. The expandable panel reinforcing material according to claim 1, wherein said plastic component is a liquid epoxy-based resin exhibiting a viscosity in a range of 500 to 30,000 mPa·s at a temperature of 25°C, and said liquid epoxy-based resin comprises at least one component having a benzene skeleton.

9. The expandable panel reinforcing material according to claim 1, wherein said curing agent comprises at least dicyanodiamide.

10. The expandable panel reinforcing material according to claim 1, wherein said curing accelerator is an amine-based or imidazole-based curing accelerator.

11. The expandable panel reinforcing material according to claim 1, wherein when being subjected to heat expanding and curing at $(T + 20)$°C for 20 minutes, said expandable panel reinforcing material affords an expanded body having a closed-cell structure with an average cell diameter of 10 to 500 $\mu$m.

12. The expandable panel reinforcing material according to claim 1, wherein said expandable panel reinforcing material is used for reinforcing a panel having a thickness of 3 mm or less, the panel being selected from a carbon fiber-reinforced resin plate, a steel plate, and an aluminum plate.

13. The expandable panel reinforcing material according to claim 1, wherein
said expandable composition layer further comprises a compound containing rubber or a rubber component that is phase-separated in the plastic component of said crosslinked polymer matrix to be an island part of a sea-island structure, and
said expandable panel reinforcing material exhibits a physical property that a change rate of maximum point strengths at -40°C and 80°C to a maximum point strength at 23°C is 25% or less, in maximum point strengths obtained by measuring a reinforced panel with three-point bending at a span of 100 mm under temperature atmospheres of -40°C, 23°C, and 80°C, the reinforced panel being obtained by sticking the expandable panel reinforcing material to a cold rolled steel plate having a thickness of 0.8 mm and integrating the expandable panel reinforcing material and the cold rolled steel plate under heat at 180°C.

14. The expandable panel reinforcing material according to claim 13, wherein said island part comprises a specific island part at a phase separation scale of 10 to 1,000 nm, and said specific island part exists, in a cross-sectional photograph of a panel reinforcing material after heat expansion and curing with use of an electron microscope, in the number of 10 or more in a range of 3,000 nm × 3,000 nm.

15. A method for producing the expandable panel reinforcing material as defined in claim 1, the method comprising obtaining said crosslinked polymer matrix by polymerizing a monofunctional monomer having one polymerizable functional group and a polyfunctional monomer having two or more polymerizable functional groups with use of a polymerization initiator, wherein
said polymerization is performed in presence of said plastic component, said curing agent, said curing accelerator, said filler, and said thermally decomposable blowing agent.

16. A method for reinforcing a panel, the method comprising the steps of:

sticking the expandable panel reinforcing material as defined in claim 1 to a panel to temporarily fixing the expandable panel reinforcing material and the panel; and
subjecting said expandable panel reinforcing material to heat expanding and curing at T°C or higher.

Fig. 1

Fig. 2

Fig. 3

Fig. 4

## INTERNATIONAL SEARCH REPORT

| International application No. |
|---|
| PCT/JP2016/084623 |

### A. CLASSIFICATION OF SUBJECT MATTER

*B32B5/24*(2006.01)i, *C08G59/40*(2006.01)i, *C08G59/50*(2006.01)i, *C08J9/06* (2006.01)i

According to International Patent Classification (IPC) or to both national classification and IPC

### B. FIELDS SEARCHED

Minimum documentation searched (classification system followed by classification symbols)
B32B1/00-43/00, C08G59/40, C08G59/50, C08J9/06

Documentation searched other than minimum documentation to the extent that such documents are included in the fields searched
   Jitsuyo Shinan Koho          1922-1996   Jitsuyo Shinan Toroku Koho   1996-2017
   Kokai Jitsuyo Shinan Koho    1971-2017   Toroku Jitsuyo Shinan Koho   1994-2017

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X <br> <br> Y | JP 6-170997 A  (Nippon Zeon Co., Ltd. et al.), <br> 21 June 1994 (21.06.1994), <br> claims; 0001, 0005 to 0010, 0013 to 0014, 0018; <br> examples; table 3 <br> (Family: none) | 1-4,6-7, <br> 9-12,15-16 <br> 5,8,13-14 |
| Y <br> A | JP 2005-139218 A  (Nitto Denko Corp.), <br> 02 June 2005 (02.06.2005), <br> claims; 0016, 0020 to 0023, 0042; table 1 <br> & US 2005/0103422 A1 <br> 0018, 0025 to 0029, 0049; table 1; claims <br> & EP 1531040 A2 | 5,8,13-14 <br> 1-4,6-7, <br> 9-12,15-16 |
| A | JP 4-336241 A  (Nippon Zeon Co., Ltd. et al.), <br> 24 November 1992 (24.11.1992), <br> entire text <br> (Family: none) | 1-16 |

☐ Further documents are listed in the continuation of Box C.          ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
|    01 February 2017 (01.02.17) |    14 February 2017 (14.02.17) |

| Name and mailing address of the ISA/ | Authorized officer |
|---|---|
|    Japan Patent Office <br>    3-4-3,Kasumigaseki,Chiyoda-ku, <br>    Tokyo 100-8915,Japan | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005139218 A

**Non-patent literature cited in the description**

- General Review of Epoxy Resins Basic Edition. The Japan Society of Epoxy Resin Technology, 2003